# EUROPÄISCHE PATENTSCHRIFT

(11) **EP 1 002 723 B1**
(45) Veröffentlichungstag und Bekanntmachung des Hinweises auf die Patenterteilung: **03.04.2002**
(21) Anmeldenummer: 99122217.5
(22) Anmeldetag: 06.11.1999
(51) Int. Cl.: B65B 19/22, B65B 35/20, B65G 47/84

(54) **Vorrichtung zum Überführen von Packungsblöcken aus stabförmigen Artikeln der tabakverarbeitenden Industrie**
Device for transferring blocks of rod-like articles of the tabacco industry
Dispositif pour transférer des groupes d'articles en forme de tige de l'industrie du tabac

(30) Priorität: 19.11.1998 DE 19853313
(43) Veröffentlichungstag der Anmeldung: 24.05.2000
(73) Patentinhaber: TOPACK Verpackungstechnik GmbH, 21493 Schwarzenbek (DE)
(72) Erfinder: Grossmann, Jürgen, 21465 Wentorf (DE); Kleine Wächter, Michael, 23881 Lankau (DE)
(74) Vertreter: Herrmann, Günther

(56) Entgegenhaltungen:
- EP-A- 0 756 995

## Beschreibung

Die Erfindung betrifft eine Vorrichtung zum Überführen von wenigstens teilweise umhüllten Packungsblöcken aus stabförmigen Artikeln der tabakverarbeitenden Industrie mittels einer Stößeleinrichtung von einem ersten Niveau einer stationären Übergabeposition auf ein zweites Niveau in Aufnahmezellen eines umlaufenden, als um eine vertikale Achse rotierender horizontaler Drehteller ausgebildeten Fördermittels, denen im Wechsel mit der Stößeleinrichtung die Packungsblöcke in den Aufnahmezellen haltende Sperrmittel zugeordnet sind.

Vorrichtungen der eingangs bezeichneten Art sind Komponenten von Verpakkungsmaschinen für Zigaretten, wie sie beispielsweise in der EP 0 756 995 A1 näher dargestellt und beschrieben sind.
Das mit den genannten Aufnahmezellen bestückte Fördermittel in Form eines horizontal angeordneten Drehtellers ist üblicherweise als Verpackungsorgan für eine Folge von Verpackungsoperationen bzw. als teilweise umhüllte Packungen überführende Zwischenstation in den Verpackungsprozeß eingebunden, wobei die Sperrmittel aufnahmeseitig für eine erhöhte Effektivität bzw. Übertragungsrate an der entsprechenden Schnittstelle sorgen.
Nun wirkt ein derartiger Drehteller aber auch abgabeseitig mit einem weiteren gleichzeitig Förder- und Faltfunktionen erfüllenden Drehteller zusammen, was zum Beispiel in der DE 19 703 069 A1 offenbart ist, wobei dessen Aufnahmezellen eine fluchtende Überführungsstellung mit den Aufnahmezellen des oberen Drehtellers einnehmen, in welcher während der Überführung von teilweise umhüllten Zigarettenblöcken gleichzeitig Abschnitte einer Außenumhüllung abgefaltet werden.

Der Erfindung liegt die Aufgabe zugrunde, die Absperrung der Aufnahmezellen des oberen Drehtellers derart vorzunehmen, daß sich im Zusammenwirkungsbereich zwischen oberem und unterem Drehteller bauliche und funktionsmäßige Verbesserungen ergeben.

Diese Aufgabe wird erfindungsgemäß dadurch gelöst, daß die Aufnahmezellen des auf dem zweiten höheren Niveau angeordneten. Fördermittels mit die Aufnahmezellen in den Wirkungsbereich der Sperrmittel überführenden Stellantriebsmitteln versehen sind.
Eine effektive, durch einen kurzen Stellweg erzielbare Sperrstellung ist nach einem weiteren Vorschlag dadurch gewährleistet, daß die Stellantriebsmittel die Aufnahmezellen durch Radialverschiebung in den Wirkungsbereich der Sperrmittel überführend ausgebildet sind, wobei eine zusätzliche, die Zusammenwirkung mit anderen Maschinenkomponenten erleichternde Ausgestaltung darin besteht, daß der einen Teilquerschnitt der Aufnahmezellen abdeckende Wirkungsbereich der Sperrmittel durch radiale Einwärtsbewegung der Aufnahmezellen aktiviert wird.

Es ist denkbar, die Sperrmittel als stationäre Stützplatte unterhalb des Drehtellers anzuordnen. Eine bevorzugte Weiterbildung besteht hingegen darin, daß die Sperrmittel als mit dem Drehteller umlaufende Stützplatte ausgebildet sind.

Eine bestmögliche Zusammenwirkung der Stellantriebsmittel mit den Überführungsmitteln für die Packungsblöcke besteht nach einem weiteren Vorschlag darin, daß die Stößeleinrichtung einen in der Ebene einer Zuführungsplattform der stationären Übergabestation einen Packungsblock aufnehmenden Hubstößel umfaßt.

Die mit der Erfindung erzielten Vorteile sind insbesondere im Zusammenhang mit der Blankettfaltung und dem Blanketttransport am zweiten bzw. unterseitigen Drehteller zu sehen. Durch die versetzbaren Aufnahmezellen des oberen Drehtellers entfallen die Störkreise der beiden Drehteller nach der Aufwärtsfaltung einer Packungskopflasche, welche dadurch ohne Behinderung durch den oberen Drehteller frei mit dem weiterdrehenden unteren Drehteller mitgeführt wird. Auf diese Weise kann der gegenseitige Vertikalabstand der beiden Drehteller und damit auch der Überführungshub für den Zigarettenblock reduziert werden. Außerdem kann damit einhergehend eine größere ebene Blankett-Auflagefläche zum Ansaugen der Verpackungszuschnitte auf der Oberseite des unteren Drehtellers erhalten werden, was den Transport der Zuschnitte sicherer macht und die weitere Blankettfaltung erleichtert.

Ein Ausführungsbeispiel der Erfindung ist in der Zeichnung dargestellt und wird nachstehend erläutert.

Hierbei zeigen:
- Figur 1: einen Längsschnitt durch einen Drehteller mit zugeordneter Übergabestation für Packungsblöcke,
- Figuren 2 und 3: Teilschnitte unterschiedlicher Arbeitsstellungen im Bereich der Übergabestation und
- Figuren 4 und 5: Teilschnitte unterschiedlicher Arbeitsstellungen des Drehtellers in einem Zusammenwirkungsbereich mit einem weiteren, unterseitigen Drehteller.

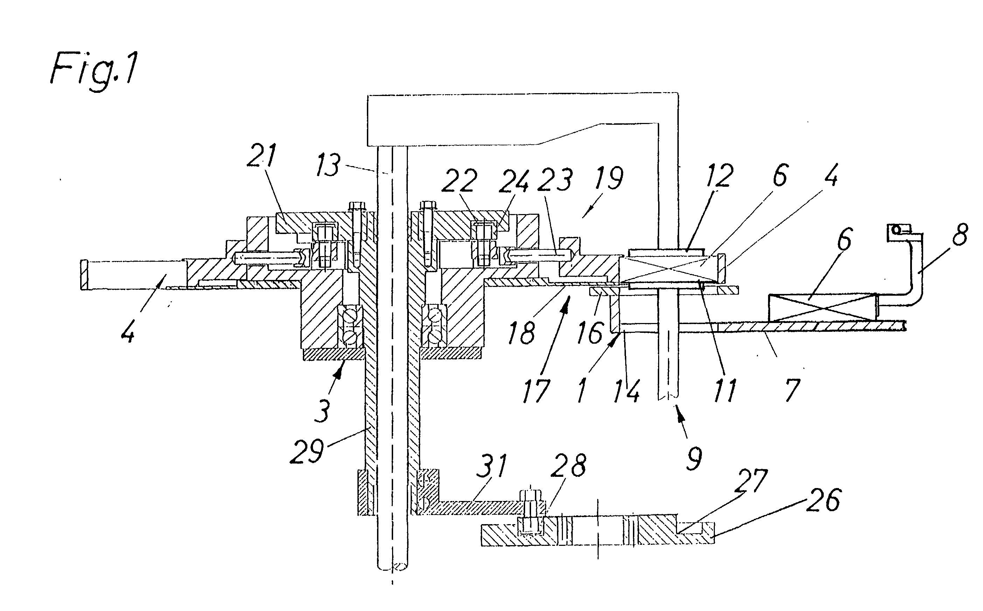

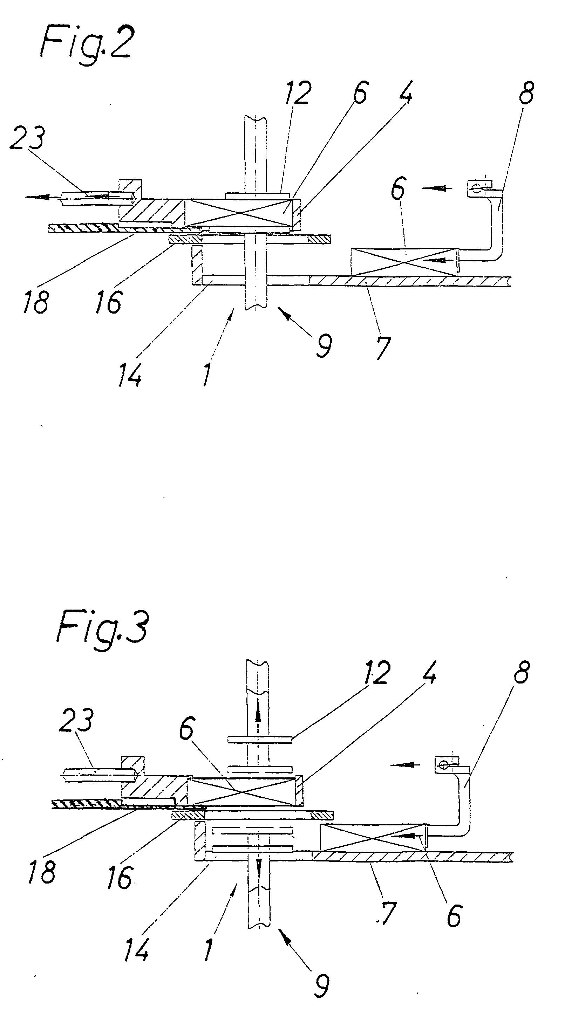

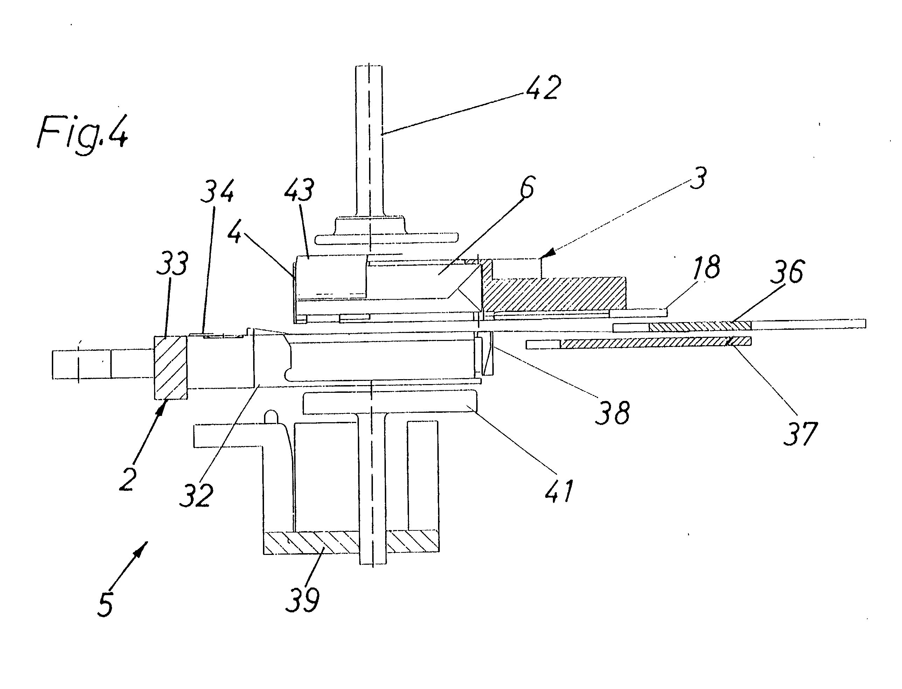

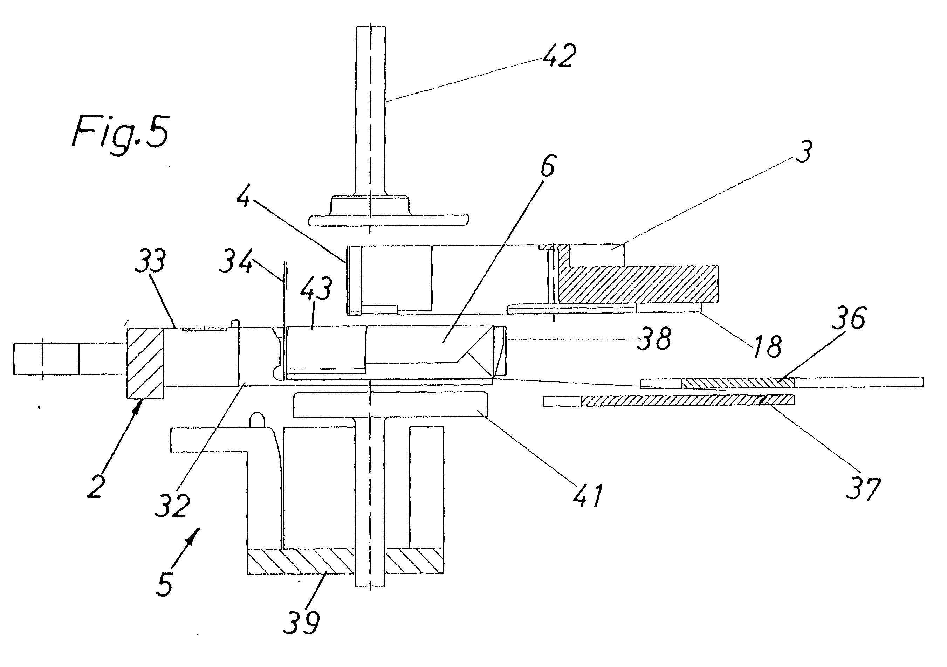

Der in den Figuren 1 bis 3 dargestellte, in einer Übergabeposition mit einer ortsfesten, unterseitigen Übergabestation 1 und gemäß den Figuren 4 und 5 in einer weiteren Übergabeposition mit einem unterseitigen Drehteller 2 zusammenwirkender Drehteller 3 ist mit mehreren Aufnahmezellen 4 für Packungsblöcke 6 ausgestattet und taktweise rotierend antreibbar.
Die auf einem unteren Niveau auf einer ortsfesten Zuführungsplattform 7 der Übergabestation 1 mittels eines horizontal vor- und zurückbewegten Schwenkstößels 8 zugeführten Packungsblöcke 6 werden mittels einer Stößeleinrichtung 9 auf ein höheres Niveau in die Aufnahmezellen 4 des Drehtellers 3 überführt.
Die Stößeleinrichtung 9 weist einen unteren Hubstößel 11 und einen Oberstößel 12 auf, dessen Führungsstange 13 längsverschiebbar durch eine zentrale Achsbohrung des Drehtellers 3 hindurchgeführt ist und somit zugleich dessen Drehachse bildet.
Der untere Hubstößel 11 ist durch eine Durchbrechung 14 der Zuführungsplattform 7 hindurchgeführt. In der in Figur 1 dargestellten fluchtenden Stellung der Aufnahmezelle 4 mit der Übergabestation 1 ist zwischen beiden ein stationäres Mundstück 16 vorgesehen.
Im Bereich der Übergabestation 1 wirkt die Stößeleinrichtung 9 bzw. deren Hubstößel 11 wechselweise mit Sperrmitteln 17 zum Halten der Packungsblöcke 6 in den Aufnahmezellen 4 zusammen. Die Sperrmittel 17 bestehen aus einer unterseitig der Aufnahmezellen 4 am Drehteller 3 befestigten Stützplatte 18 und Stellantriebsmitteln 19 zur radialen Verschiebung der Aufnahmezellen 4 in den Wirkungsbereich der Stützplatte 18. Die eine Hin- und Herbewegung der Aufnahmezelle 4 auslösenden Stellantriebsmittel 19 weisen eine relativ zur Rotation des Drehtellers 3 hin- und herschwenkbare Steuerkurve 21 auf, in deren Führungsnut 22 eine am Ende einer Schubstange 23 der Aufnahmezelle 4 gelagerte Steuerrolle 24 eintaucht. Der Antrieb der Steuerkurve 21 erfolgt durch eine Antriebskurve 26, in deren Führungsnut 27 eine Steuerrolle 28 eintaucht, die am Ende eines mit einer Hohlwelle 29 der Steuerkurve 21 verbundenen Antriebshebels 31 gelagert ist. Die sich gemäß den Figuren 4 und 5 über einen Kreisbahnabschnittsbereich überlappenden Drehteller 2 und 3 sind mit relativ geringem Vertikalabstand zueinander angeordnet. Der untere Drehteller 2 ist ebenfalls mit Aufnahmezellen 32 bestückt und weist oberseitig eine Aufnahmeplattform 33 zur Plazierung eines die Aufnahmezelle 32 überdeckenden Verpackungszuschnitts 34 auf, dessen hinteres freiliegendes Ende zwischen zwei Hilfsführungen 36 und 37 aufgenommen wird. Mit 38 ist ein seitlich der Aufnahmezelle 32 angeordneter Bodenhalter bezeichnet, der zwischen aufeinanderfolgenden Faltoperationen zum Einsatz kommt. Außerdem sind an der Übergabestation 5 ein äußerer Faltstößel 39 und ein innerer Unterstößel 41 vorgesehen, welche gemeinsam bzw. relativ zueinander durch die Ebene der Aufnahmeplattform 33 bzw. die Aufnahmezellen 32 des unteren Drehtellers 2 hindurchbewegbar sind, wobei dem Unterstößel 41 ein gegenläufig bzw. synchron absenkbarer Oberstößel 42 zugeordnet ist.
Die Wirkungsweise der Vorrichtung im Bereich der Übergabestationen 1 und 5 ist wie folgt:
Gemäß Figur 1 wird von einer Arbeitsstellung der Vorrichtung ausgegangen, in der gerade ein Packungsblock 6 durch den Hubstößel 11 und den Oberstößel 12 gefesselt von der Zuführungsplattform 7 in eine fluchtend darüberstehende Aufnahmezelle 4 des Drehtellers 3 überführt worden ist. Durch anschließende Betätigung der Stellantriebsmittel 19 wird die Aufnahmezelle 4 gemäß Figur 2 soweit radial einwärtsbewegt, daß ein Teilabschnitt des Packungsblocks 6 auf die Stützplatte 18 gelangt, so daß der Packungsblock 6 gegen Ausfall aus der Aufnahmezelle 4 gesichert ist. Der Oberstößel 12 und der Hubstößel 11 werden in ihre Ausgangsposition zurückbewegt, wobei der in die Durchbrechung 14 der Zuführungsplattform eintauchende Hubstößel 11 den Weg freimacht für den Nachschub eines weiteren Pakkungsblocks 6 durch den Schwenkstößel 8 (Figur 3).
Anschließend wird die mit dem Packungsblock 6 versehene Aufnahmezelle 4 durch rotative Fördertakte zur Übergabestation 5 gemäß Figur 4 weiterbewegt, wobei an einer nicht dargestellten Zwischenstation ein sogenannter Kragen 43 auf den Pakkungsblock 6 aufgelegt wird.
In der Übergabestation 5 steht gleichzeitig eine Aufnahmezelle 32 des Drehtellers 2 mit einem Verpackungszuschnitt 34 auf der Aufnahmeplattform 33 in Bereitschaft. Während der Faltstößel 39 und der Unterstößel 41 gleichzeitig aufwärts fahren bzw. der Oberstößel 42 gegen den Packungsblock 6 abgesenkt wird, wird die Aufnahmezelle 4 des Drehtellers 3 gleichzeitig radial gemäß Figur 4 auswärts gefahren. Auf diese Weise wird die Kopflasche des Verpackungszuschnitts 34 aufwärts gefaltet und dabei zunächst an die Außenwand der Aufnahmezelle 4 angelegt. Anschließend wird der Packungsblock 6 gemeinsam mit dem hochgefalteten Verpackungszuschnitt 34 in die Aufnahmezelle 32 des Drehtellers 2 überführt, was in Figur 5 dargestellt ist. Faltstößel 39 sowie Unterstößel 41 und Oberstößel 42 fahren in ihre Ausgangspositionen zurück und schaffen somit wieder einen rotativen Freiraum für die Drehteller 2 und 3, wobei gleichzeitg gemäß Figur 5 die Aufnahmezelle 4 des oberen Drehtellers 3 radial einwärtsbewegt wird. Auf diese Weise wird ein Freiraum zwischen der aufwärts gefalteten Kopflasche des Verpackungszuschnitts 34 und der Aufnahmezelle 4 geschaffen, deren Störkreise bei der Relativdrehung der beiden Drehteller 2 und 3 ohne Behinderung aneinander vorbeibewegt werden.

## Patentansprüche

1. Vorrichtung zum Überführen von wenigstens teilweise umhüllten Packungsblöcken aus stabförmigen Artikeln der tabakverarbeitenden Industrie mittels einer Stößeleinrichtung (9) von einem ersten Niveau einer stationären Übergabeposition (1) auf ein zweites Niveau in Aufnahmezellen (4) eines umlaufende, als um eine vertikale Achse (13) rotierender horizontaler Drehteller (3) ausgebildeten Fördermittels, denen im Wechsel mit der Stößeleinrichtung (9) die Packungsblöcke (6) in den Aufnahmezellen (4) haltende Sperrmittel (17) zugeordnet sind, **dadurch gekennzeichnet, daß** die Aufnahmezellen (4) des auf dem zweiten höheren Niveau angeordneten Fördermittels mit die Aufnahmezellen in den Wirkungsbereich der Sperrmittel (17) überführenden Stellantriebsmitteln (19) versehen sind.

2. Vorrichtung nach Anspruch 1, **dadurch gekennzeichnet, daß** die Stellantriebsmittel (19) die Aufnahmezellen (4) durch Radialverschiebung in den Wirkungsbereich der Sperrmittel (17) überführend ausgebildet sind.

3. Vorrichtung nach Anspruch 1 oder 2, **dadurch gekennzeichnet, daß** der einen Teilquerschnitt der Aufnahmezellen (4) abdeckende Wirkungsbereich der Sperrmittel (17) durch radiale Einwärtsbewegung der Aufnahmezellen aktiviert wird.

4. Vorrichtung nach einem der Ansprüche 1 bis 3, **dadurch gekennzeichnet, daß** die Sperrmittel (17) als mit dem Drehteller (3) umlaufende Stützplatte (18) ausgebildet sind.

5. Vorrichtung nach einem der Ansprüche 1 bis 4, **dadurch gekennzeichnet, daß** die Stößeleinrichtung (9) einen in der Ebene einer Zuführungsplattform (7) der stationären Übergabestation (1) einen Packungsblock (6) aufnehmenden Hubstößel (11) umfaßt.

## Claims

1. A device for transferring at least partially wrapped packing blocks of rod-shaped articles, produced in the tobacco-processing industry, by means of a push-rod arrangement (9) from a first level of a stationary transfer station (1) to a second level in receiving compartments (4) of a rotating conveying means formed as a horizontal rotary table (3) rotating about a vertical axis (13), wherein blocking means (17), which retain the packing blocks (6) in the receiving compartments (4), are associated with the receiving compartments (4) and act reciprocally with the push-rod arrangement (9), **characterised in that** the receiving compartments (4) of the conveying means arranged at the second, higher level are provided with actuating drive means (19) moving the receiving compartments into the effective range of the blocking means (17).

2. A device according to claim 1, **characterised in that** the actuating drive means (19) are formed so as to move the receiving compartments (4) into the effective range of the blocking means (17) by radial displacement.

3. A device according to claim 1 or 2, **characterised in that** the effective range of the blocking means (17), covering a partial cross-section of the receiving compartments (4), is activated by radial inwards movement of the receiving compartments.

4. A device according to any one of claims 1 to 3, **characterised in that** the blocking means (17) are formed as a supporting plate (18) rotating together with the rotary table (3).

5. A device according to any one of claims 1 to 4, **characterised in that** the push-rod arrangement (9) comprises a lifting rod (11) receiving a packing block (6) in the plane of a supply platform (7) of the stationary transfer station (1).

## Revendications

1. Dispositif pour transférer, au moyen d'un système de poussoirs (9), des blocs en paquet, enveloppés au moins partiellement, d'articles en forme de tige de l'industrie de transformation du tabac, d'un premier niveau, en un emplacement fixe de remise (1), à un second niveau, dans des alvéoles de réception (4) d'un moyen de transport rotatif conçu sous forme d'un plateau tournant horizontal (3) entraîné en rotation autour d'un axe vertical (13), alvéoles de réception auxquelles sont associés des moyens d'arrêt (17) maintenant les blocs en paquet (6) dans les alvéoles de réception (4), en alternance avec le système de poussoirs (9), **caractérisé en ce que** les alvéoles de réception (4) du moyen de transport placé au second niveau, qui est le plus haut, sont pourvues de moyens d'actionnement asservis (19) transférant les alvéoles de réception dans la zone d'action des moyens d'arrêt (17).

2. Dispositif selon la revendication 1, **caractérisé en ce que** les moyens d'actionnement asservis (19) sont conçus de façon à transférer les alvéoles de réception (4) par translation radiale dans la zone d'action des moyens d'arrêt (17).

3. Dispositif selon la revendication 1 ou 2, **caractérisé en ce que** la zone d'action des moyens d'arrêt (17), qui couvre une section transversale partielle des alvéoles de réception (4), est rendue active par déplacement radial vers l'intérieur des alvéoles de réception.

4. Dispositif selon l'une des revendications 1 à 3, **caractérisé en ce que** les moyens d'arrêt (17) sont conçus sous forme d'une plaque d'appui (18)qui tourne avec le plateau tournant (3).

5. Dispositif selon l'une des revendications 1 à 4, **caractérisé en ce que** le système de poussoirs (9) comprend un poussoir élévateur (11) recevant un bloc en paquet (6) dans le plan d'une plate-forme d'amenée (7) du poste fixe de remise (1).
